# EUROPEAN PATENT APPLICATION

(11) **EP 4 138 004 A1**
(43) Date of publication of application: **22.02.2023**
(21) Application number: 21789192.8
(22) Date of filing: 06.04.2021
(51) Int. Cl.: G06N 20/00

(54) **METHOD AND APPARATUS FOR ASSISTING MACHINE LEARNING MODEL TO GO ONLINE**

(30) Priority: 17.04.2020 CN 202010307148
(71) Applicant: The Fourth Paradigm (Beijing) Tech Co Ltd, Beijing 100085 (CN)
(72) Inventor: ZHOU, Keji, Beijing 100085 (CN); CHEN, Jing, Beijing 100085 (CN); WANG, Taize, Beijing 100085 (CN); KONG, Wei, Beijing 100085 (CN)
(74) Representative: Zimmermann, Tankred Klaus
(86) International application number: PCT/CN2021/085620
(87) International publication number: WO 2021/208774

(57) **Abstract**

Disclosed are a method and apparatus for assisting a machine learning model to go online. The method comprises: acquiring a model file obtained by training a machine learning model offline; analyzing the model file to determine a training data table used in a model training process; creating in an online database an online data table having table information consistent with that of the training data table; and importing at least part of offline data into the online data table, such that when the offline trained machine learning model is deployed online, a cold boot of online data can be achieved by means of the present disclosure to provide support for the model to go online.

## Description

### CROSS-REFERENCE TO RELATED APPLICATION

This application claims priority to Chinese Patent Application No. 202010307148.5, named "METHOD AND APPARATUS FOR ASSISTING LAUNCH OF MACHINE LEARNING MODEL" filed on April 17, 2020.

### FIELD

The present disclosure generally relates to the field of artificial intelligence, and more particularly to a method and apparatus for assisting launch of a machine learning model.

### BACKGROUND

Machine learning is an inevitable product of the research and development of artificial intelligence to a certain stage. It is committed to improving the performance of a system itself based on experience and computation. In a computer system, "experience" is usually presented in a form of "data", and a "model" can be generated from the data through a machine learning algorithm. That is, empirical data is provided to the machine learning algorithm, and based on the empirical data, a model can be generated. When facing a new situation, the model will provide a corresponding judgment, i.e., a prediction result.

At present, the machine learning is mostly applied in offline scenarios, such as marketing list output, post-event behavior tracking, *etc.* In an offline scenario, the time when a user's behavior actually occurs is earlier than the time when a predicted decision is made by a current module, and behavior changes occurred within this time interval will not be perceived, so that the model's prediction effect is poor.

With the acceleration of business iteration and decision-making rhythm, the market is paying more attention to the timeliness value of data. It is particularly important to bring the machine learning model online to make prediction on online data in real time.

### SUMMARY

Explanatory embodiments of the present disclosure are intended to provide a solution for assisting launch of a machine learning model to provide supports for the machine learning model to come online.

According to a first aspect of the present disclosure, a method for assisting launch of a machine learning model is provided. The method includes: acquiring a model file from offline training of the machine learning model; determining a training data table used in a model training process by analyzing the model file; creating in an online database an online data table having consistent table information with the training data table; and importing at least a part of offline data into the online data table.

According to a second aspect of the present disclosure, an apparatus for assisting launch of a machine learning model is provided. The apparatus includes: an acquiring module, configured to acquire a model file from offline training of the machine learning model; a first determining module, configured to determine a training data table used in a model training process by analyzing the model file; a creating module, configured to create in an online database an online data table having consistent table information with the training data table; and an importing module, configured to import at least a part of offline data into the online data table.

According to a third aspect of the present disclosure, a system is provided. The system includes: at least one computing device; and at least one storage device having stored therein instructions. The instructions, when run by the at least one computing device, cause the at least one computing device to execute the method as described in the first aspect of the present disclosure.

According to a fourth aspect of the present disclosure, a computer-readable storage medium having stored therein instructions is provided. The instructions, when run by at least one computing device, cause the at least one computing device to execute the method as described in the first aspect of the present disclosure.

According to a fifth aspect of the present disclosure, a computing device is provided. The computing device includes: a processor; and a memory having stored therein a set of computer executable instructions. The set of computer executable instructions, when executed by the processor, causes the processor to: acquire a model file from offline training of a machine learning model; determine a training data table used in a model training process by analyzing the model file; create in an online database an online data table having consistent table information with the training data table; and import at least a part of offline data into the online data table.

In the method and apparatus for assisting the launch of the machine learning model according to explanatory embodiments of the present disclosure, by analyzing the model file, creating the online data table having consistent table information with the training data table, and importing the offline training data within a certain time range into the created online data table, cold boot of the online data may be realized to provide supports for the machine learning model to come online.

### BRIEF DESCRIPTION OF THE DRAWINGS

At least one of these and other aspects and advantages of the present disclosure will become apparent and more readily appreciated from the following descriptions on embodiments of the present disclosure made with reference to the drawings, in which:
FIG 1 shows a flowchart of a method for assisting launch of a machine learning model according to explanatory embodiments of the present disclosure;
FIG 2 shows a DAG (directed acyclic graph) of a model training process;
FIG 3 is schematic diagram showing a part of information carried by a model file;
FIG 4 shows a schematic diagram of a graphical interface displayed to a user;
FIG 5 shows a schematic diagram of a service detail page displayed to a user;
FIG 6 shows a schematic diagram of a consistency verifying process;
FIG 7 is a schematic flowchart of online launch of a model, which shows how to bring the model online;
FIG 8 shows a schematic block diagram of an apparatus for assisting launch of a machine learning model according to explanatory embodiments of the present disclosure.

### DETAILED DESCRIPTION

In order to enable those skilled in the art to better understand the present disclosure, explanatory embodiments of the present disclosure will be further illustrated in detail below with reference to the accompanying drawings and specific embodiments.

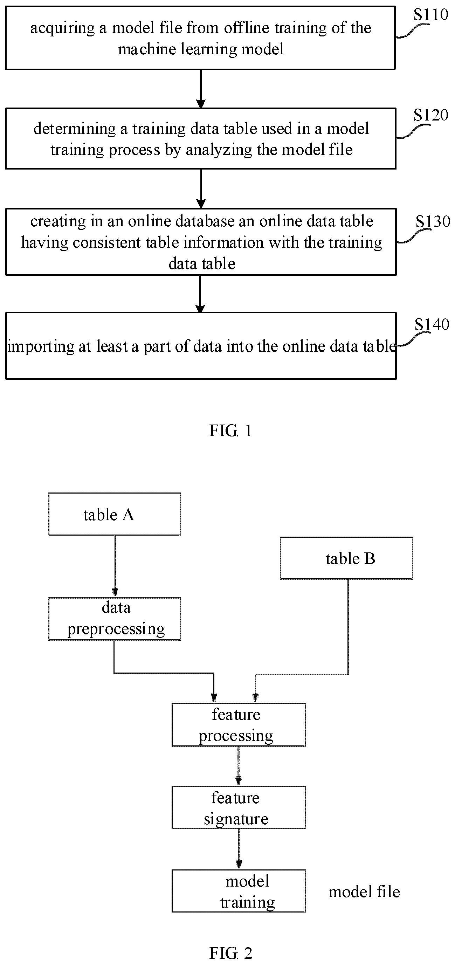

FIG 1 shows a flowchart of a method for assisting launch of a machine learning model according to explanatory embodiments of the present disclosure. The method shown in FIG 1 may be implemented entirely in software through a computer program, and it may also be executed by a specially configured computing device.

Referring to FIG 1, in step S110, a model file is acquired from offline training of a machine learning model.

The model file acquired from the offline training of the machine learning model refers to a model file obtained by model training in an offline environment. A training process of the machine learning model is not a focus of the present disclosure and will not be elaborated herein. Information contained in the model file may include, but is not limited to, model structure information, training process configuration information and other information related to the model training.

In step S120, the model file is analyzed to determine a training data table used in a model training process. The training data table refers to an input table corresponding to a feature processing step in the model training process, i.e., an input table before the feature processing. Generally, an original data table will be preprocessed before the feature processing to make the preprocessed data table meet training requirements. Among others, the training data table refers to an input table for feature processing after preprocessed.

Model training process information may be obtained by analyzing the model file, and according to the model training process information, an input table corresponding to the feature processing step is determined as the training data table used in the model training process. The model training process information may include, but is not limited to, one or more of the following items: a processing node in the model training process, an input table corresponding to the processing node, and an output table corresponding to the processing node. The processing node may be regarded as a specific machine learning step in the model training process. A corresponding processing manner may also be included at the processing node, and the processing manner may be but not limited to a processing script or an operator.

As an example, the model file may include a feature processing script (such as a feature construction script). The feature processing script may be written based on a specific description language. In the present disclosure, the training data table may be determined by analyzing the feature processing script. Regarding a specific structure of the feature processing script, it is not limited in the present disclosure.

FIG 2 shows a DAG (directed acyclic graph) of a model training process. As shown in FIG 2, the DAG includes a data table A, a data table B, data preprocessing, feature processing, feature signature, and model training. The data table A is not directly subjected to the feature processing, but needs to be preprocessed, so the data table A does not meet the definition of the training data table.

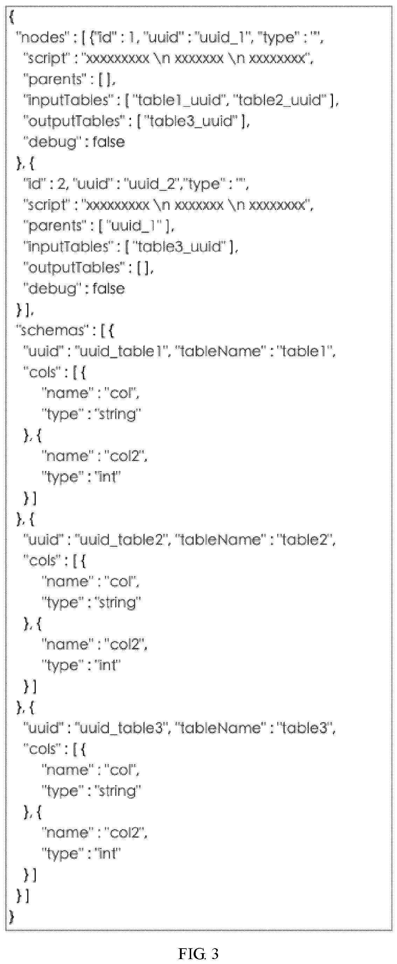

As an example, the model file finally generated after trained according to the DAG shown in FIG 2 may carry information shown in FIG 3. In the present disclosure, the information shown in FIG 3 may be obtained by analyzing the model file. The information shown in FIG 3 illustrates relationships between operator nodes (i.e., processing nodes mentioned above), input tables of the operator nodes, output tables of the operator nodes, feature processing scripts and other contents. In the present disclosure, the input table (i.e., the training data table) before the feature processing may be screened out from the above contents. For example, the data table B and an input table obtained after preprocessing the data table A may be used as the training data table, and an organizational structure (i.e., schema), a table name and other table information of the training data table may be obtained. In embodiments of the present disclosure, the model file may be a script file based on a programming language, and information based on the programming language as shown in FIG 3 may be obtained by screening the model file in the form of script file. That is, the information shown in FIG 3 may be a part of the script taken from the model file. In FIG 3, "nodes" indicate the operator nodes, "script" indicates the feature processing script, "inputTables" indicate the input tables, "outputTables" indicate the input tables, "uuid" and "cols" indicate information on the structure and name of a data table, including but not limited to, for example, a table name, a field name in a table, a field type and the like.

In step S130, an online data table is created in an online database, and table information of the online data table is consistent with that of the training data table. The table information may refer to the organizational structure (schema), the table name and other information of the training data table, including but not limited to, for example, the field name and field type of the training data table. After the online data table is created, data generated online in real time (i.e., online data) can be imported into the online data table.

The online database refers to a database for storing the online data. The online database may adopt a KV (key-value) storage database (such as Redis or other real-time feature storage engines like RtiDB) to ensure high reading and writing performance and high data availability. In addition, when storing data in the online database, it is necessary to take into consideration a logic of feature construction to set a reasonable key. For example, in the feature construction, if a name field is used as a key for feature calculation, it is necessary to set the name as a storage key when creating the online data table.

For this, in embodiments of the present disclosure, it is also possible to store, according to a field name involved in the feature processing step which is determined by analyzing the model file, data of the online data table in the online database with the field name as the key, so as to ensure high reading and writing performances of the online data. In other words, the feature processing step determined by analyzing the model file may also include the field name and the feature processing manner for the field name. In embodiments of the present disclosure, according to the field name involved in the feature processing step, the data of the online data table may be stored in the online database using the field name as the key.

In step S140, at least a part of offline data is imported into the online data table.

Considering cold boot of the online data, i.e., there may not be enough online data for model prediction in the online data table at an initial time, at least a part of the offline data may be imported into the online data table after the online data table is created to solve the problem of data cold boot.

Generally, the online database uses a memory to store data, and storing too much data will consume machine resources and lower online performance. Taken this into consideration, in embodiments of the present disclosure, a data range for the feature processing step may be determined by analyzing the model file, and offline data corresponding to the determined data range may be imported into the online data table. For example, in a case where a maximum time interval for the feature construction is 30 days, it only needs to ensure that the offline data within the data range of 30 days is imported into the online data table. In this way, not only the problem of data cold boot is solved, but also the storage pressure of the online database is reduced, and resource costs are reduced. In an embodiment, it is possible for a user to customize the data importation, which provides flexibility to suit various actual scenarios.

By analyzing the model file, creating the online data table having the consistent table information with the training data table, and importing the offline training data within a certain time range into the created online data table, embodiments of the present disclosure are able to realize the cold boot of the online data and provide supports for the machine learning model to come online. Further, the user only needs to start an online data creating process and selects the model file desired to launch online, then the system can automatically analyze the model file, create the relevant online data table, and automatically import the offline data into the online data table, so as to reduce the occurrence of failed table creation and table transfer from user's manual manipulation.

After the online data table is created, a pre-launch prediction service (i.e., a prediction service intended to launch for available online) may be deployed for realizing a prediction function (i.e., an online prediction function) of the machine learning model. Moreover, before the pre-launch prediction service is brought online, prediction effects of the pre-launch prediction service may be subjected to consistency verification to ensure the reliability of the pre-launch prediction service. The consistency verification refers to verification on consistency between an online prediction result of the pre-launch prediction service and an offline prediction result in the offline environment.

As an example, a first predicting operation may be performed on data to be analyzed through the pre-launch prediction service to obtain a first prediction result; a second predicting operation may be performed on the data to be analyzed in the offline environment to obtain a second prediction result; the first prediction result is compared with the second prediction result; and whether to bring the pre-launch prediction service online is determined according to a difference between the first prediction result and the second prediction result. If the difference between the first prediction result and the second prediction result is greater than a first threshold, it indicates that the online prediction effect of the pre-launch prediction service is poor. In this case, the pre-launch prediction service may be modified, and the consistency verification may be performed again on the modified pre-launch prediction service. If the difference between the first prediction result and the second prediction result is less than a second threshold, it indicates that the online prediction effect of the pre-launch prediction service is consistent with the offline prediction effect, and the pre-launch prediction service can be deployed online. Among others, the first threshold is greater than or equal to the second threshold. The data to be analyzed may be sample data specified by the user, data in the online database, or data from other sources, which is not limited in the present disclosure.

The second predicting operation performed on the data to be analyzed in the offline environment refers to a predicting operation performed on the data to be analyzed in the offline environment using an offline trained machine learning model. As an example, a downstream execution operator and a model prediction operator may be determined by analyzing the model file, the downstream execution operator is configured to characterize an operation that needs to be performed on the data to be analyzed before model prediction; the data to be analyzed is input into the downstream execution operator; an output of the downstream execution operator is input into the model prediction operator, and an output of the model prediction operator is the second prediction result obtained from the second predicting operation on the data to be analyzed.

Application of the machine learning model to online prediction can process real-time request data and improve the prediction effect of the model. However, costs for launching a model online are high, and more customized development is required in an actual application process. The method for assisting launch of a machine learning model proposed in the present disclosure can realize the cold boot of the online data, perform evaluation and verification for launch of the model, and provide supports for the machine learning model to come online.

The method for assisting launch of the machine learning model according to the present disclosure may be performed by a machine learning platform that is configured to implement machine learning-related businesses. The machine learning platform may provide the user with a model launching service in a visualization way, through which service the user can release a model online or bring the model online. For example, the machine learning platform can provide the user with a graphical interface for setting an online prediction service and receive a pre-launch prediction service selected by the user through the graphical interface. The machine learning platform can provide a plurality of pre-launch prediction services for the user to select, each pre-launch prediction service has a corresponding model file, which may be stored in a backstage server side. According to the pre-launch prediction service selected by the user, the model file corresponding to the pre-launch prediction service may be acquired from the server side. In addition, it is also possible for the user to upload the model file to the machine learning platform when selecting the pre-launch prediction service. Based on the model file, the machine learning platform is able to execute the method as described above with reference to FIG 1 to realize the cold boot of the online data, perform evaluation and verification for launch of the model, and provide supports for the machine learning model to come online.

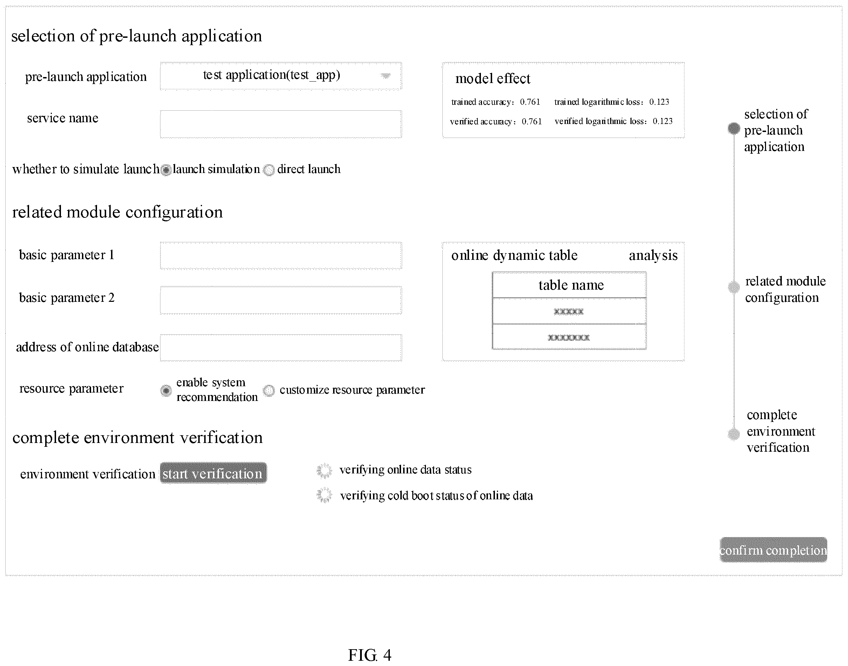

FIG 4 shows a schematic diagram of a graphical interface displayed to a user.

A pre-launch application as shown in FIG 4 is the pre-launch prediction service as described above. As shown in FIG 4, the model effect may be displayed in the graphical interface; and the created online data table (i.e., an online dynamic table shown in FIG 4) may also be displayed in the graphical interface. The model effect may include but is not limited to an accuracy, a loss function and other model evaluation indexes.

An option of launch simulation may be provided to the user, and the user can choose whether to simulate the launch as required. In a case where the user chooses to directly release the pre-launch prediction service (i.e., directly bring the pre-launch prediction service online), module configuration and environment verification are also needed, but the subsequent consistency verification will not be done. In this case, it is difficult to ensure the reliability of online prediction effect. If inconsistency occurs, costs for reverse positioning will be high. Therefore, the launch simulation is recommended to the user. In addition, during a service deployment process, the user can check the model effect and the corresponding online data table to help the user determine whether it is necessary to simulate the deployment of the pre-launch application. For example, if the model effect is poor, or the online data table is abnormal, the user can cancel the deployment to avoid resource waste.

The method according to the present disclosure can also perform at least one of the following operations: displaying resource configuration information recommended to the user in the graphical interface; and receiving resource configuration information set by the user through the graphical interface. For example, two options, i.e., "enable system recommendation" and "customize resource parameter", may be provided for the user. In a case where the option "enable system recommendation" is selected by the user, the resource configuration recommended by the system may be used. In a case where the option "customize resource parameter" is selected by the user, the resource configuration entered by the user may be received.

After the settings are completed, the environment verification may be started to verify whether a current environment of the pre-launch prediction service meets a launching requirement. The verification mentioned here may include but is not limited to verifying whether the online database is available and whether the online data is cold booted.

In a case where the current environment does not meet the launching requirement, a problem may be looked up and corrected.

In a case where the current environment meets the launching requirement, the deployment of the pre-launch prediction service may be completed, and a service detail page may be provided for the user. The service detail page may be configured to display at least one item of the pre-launch prediction service: a basic parameter, a model parameter, a consistency verification result, and service status information. The basic parameter may include, but is not limited to, at least one of the following items: a service name, a service type, a running status, a deployment time, a running time, and a resource parameter. The model parameter may include, but is not limited to, at least one of the following items: a model name, a model type, a model accuracy and a logarithmic loss value. The consistency verification result may include, but is not limited to, a prediction result of one or more pieces of prediction data in an online environment and a scoring result of the one or more pieces of prediction data in the offline environment. The service status information may include, but is not limited to, at least one of the following items: a performance index, log information and running status monitoring information.

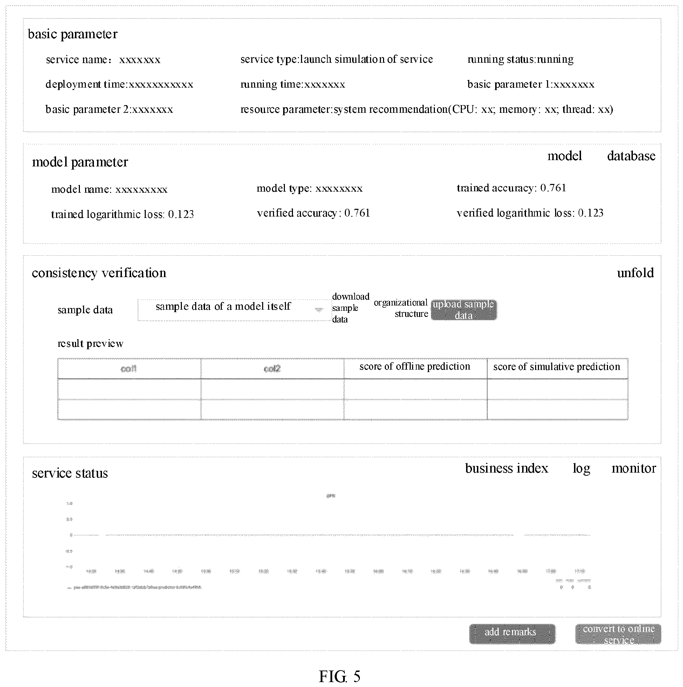

FIG 5 shows a schematic diagram of a service detail page displayed to a user.

As shown in FIG 5, the service detail page can display a basic parameter, a module parameter (including the model and the online database), consistency verification, and a service status (including the performance index, the log and the resource) of a current service. The consistency verification refers to further verification on whether a prediction performance of the pre-launch prediction service is consistent with a prediction performance of the machine learning model in the offline environment. In a case where the prediction performance of the pre-launch prediction service is consistent or basically consistent with the prediction performance of the machine learning model in the offline environment, the pre-launch prediction service may be converted into the online prediction service.

For the implementation process of verifying whether the prediction performance of the pre-launch prediction service is consistent with the prediction performance of the machine learning model in the offline environment, reference can be made to the related description above. As an example, sample data of the model itself may be used as the data to be analyzed, or sample data uploaded by the user may be acquired, and sample data specified by the user may be used as the data to be analyzed. Besides, an output field may also be specified by the user. Afterwards, an offline prediction task used for simulating an offline running environment and a simulative prediction task used for simulating an online running environment may be started to perform a prediction operation on the sample data, respectively. Finally, whether output results of the offline prediction task and the simulative prediction task for the output field are consistent may be determined.

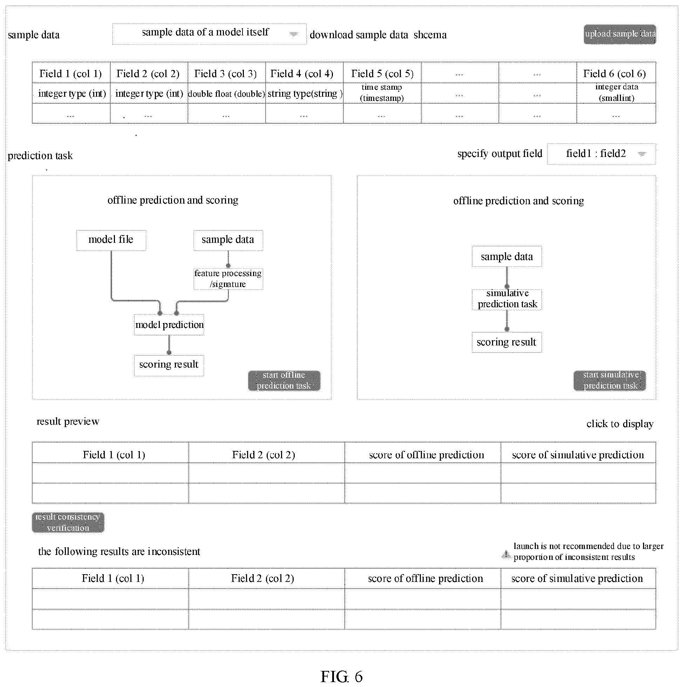

FIG 6 shows a schematic diagram of a consistency verifying process.

As shown in FIG 6, an offline estimation result and a simulated estimation result for the output field may be displayed on the page. Both the result of the offline prediction service and that of the simulative prediction service will be presented in the form of table. The user can click a button "result consistency verification" to compare the results of the two services, and for example, inconsistent results will be presented. The user can also artificially compare the results of the two services item by item. If the results meet the user's expectation (the results of the two services are identical or a deviation therebetween is tolerable), it indicates that the pre-launch prediction service meets the launching requirement, and may be deployed online.

In the case where the pre-launch prediction service is converted into the online prediction service, the method according to embodiments of the present disclosure may also perform at least one of the following steps: providing the user with a service address (such as an application programming interface (API) service address) of the online prediction service; and displaying an online prediction result of one or more pieces of prediction data to the user. Among others, in the case where the online prediction result of the one or more pieces of prediction data is displayed to the user, the method according to embodiments of the present disclosure may further include: receiving modification of one or more field values of the prediction data from the user; and displaying an online prediction result of modified prediction data. The prediction data may be data generated online in real time.

To sum up, embodiments of the present disclosure may be implemented as a set of processes for bringing a model online, including the cold boot of the online data, the launch simulation, and launch of the application. The entire processes may be guided through a visual page to reduce user's operating costs. The launch simulation means that the environment verification and consistency verification are performed before bringing the application online. When verification conditions specified by the system are met, the application can be deployed and brought online directly. The environment verification includes verifying whether the online database is available and whether the online data is cold booted. The consistency verification includes: acquiring the sample data, performing offline estimation and scoring for the sample data, performing simulative estimation and scoring for the sample data, and verifying whether the scoring results are consistent.

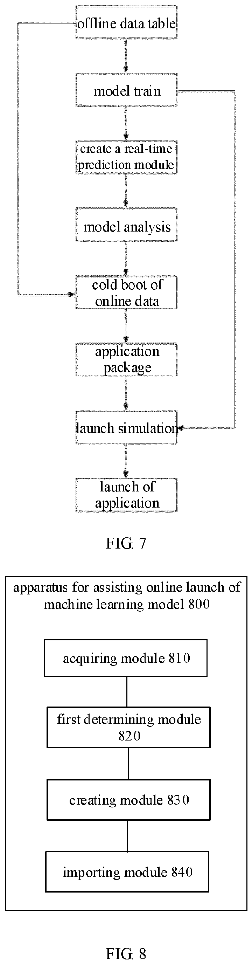

FIG 7 is a schematic flowchart of online launch of a model, which shows how to bring the model online. Among others, the cold boot of the online data and the launch simulation have been described in detail above as key points of the present disclosure, and other relevant modules will not be elaborated herein due to their default component capabilities.

As shown in FIG 7, the model training may be conducted by the user in the offline environment to generate the model file. When the user needs to deploy online launch/release of a real-time application for the currently trained model, he/she can access to an application management page to create a real-time prediction application template and select model information of the current trained model. The application template will automatically analyze the model file to obtain data table information and feature construction script required in the model training process.

The user may be guided by a page to perform the cold boot of the online data, including table creation and data transfer, based on the analysis results, and related processes will be performed uniformly on a data management page. Next, supplementary information, such as resource information, log information, etc., needs to be configured by the user, and then a real-time prediction application module is packaged into a pre-launch application, and the process of the launch simulation is entered. During the launch simulation, the system will automatically verify whether the current environment meets the launching requirement, including whether the online database is available and whether the online data is cold booted. Then, the user can customize the sample data or select the sample data provided by the system, and the prediction effect of the offline model and the simulation effect of the pre-launch model are scored, and whether the pre-launch application meets the launching requirement is determined by determining whether the data of the offline model is consistent with that of the pre-launch model, if the pre-launch application meets the launching requirement, the pre-launch model application can be directly brought online by the user, as a result, an online application is generated, and an external callable API is provided to complete the whole process. For details on the implementation of the launch of the model, please refer to the relevant descriptions above, which will not be repeated here.

It should be noted that the machine learning model (such as a neural network model) described in embodiments of the present disclosure can be used to predict image categories, text categories, voice emotions, fraudulent transactions, advertising click-through rate, etc. The machine learning model (such as the neural network model) aims to make predictions on matters associated with objects or events in related scenarios. For example, the machine learning model (such as the neural network model) may be used to predict the image categories, texts in an image, the text categories, voice emotion categories, the fraudulent transactions, the advertising click-through rate, commodity prices, etc., so that the prediction result can be used as the basis for decision-making directly or further in combination with other rules.

Further, scenarios to which the machine learning model (such as the neural network model) as described in embodiments of the present disclosure can be applied include but are not limited to: image processing scenarios, speech recognition scenarios, natural language processing scenarios, automatic control scenarios, intelligent question answering scenarios, business decision-making scenarios, service recommendation scenarios, search scenarios, and abnormal behavior detection scenarios.

The image processing scenarios include: optical character recognition (OCR), face recognition, object recognition and image classification. More specifically, for example, the OCR may be applied to bill (such as invoice) recognition, handwritten character recognition and the like, the face recognition may be applied to security and other fields, the object recognition may be applied to traffic sign recognition in an automatic driving scenario, and the image classification may be applied to functions like "photographing shopping", "looking for the same style" on e-commerce platforms.

The speech recognition scenarios include products that can conduct human-machine interaction through voices, such as voice assistants of mobile phones (such as Siri of iPhone), smart speakers, etc.

The natural language processing scenarios include: text review (such as review of contracts, legal documents, customer service records, etc.), spam content identification (such as spam short message identification), and text classification (emotions, intentions, themes, etc.).

The automatic control scenarios include predictions on regulation operations of a mining device, a wind turbine generator system or an air conditioning system. Specifically, for the mining device, a set of regulation operations with a high mining rate may be predicted; for the wind turbine generator system, a set of regulation operations with a high power generation efficiency may be predicted; and for the air conditioning system, a set of regulation operations that meet the usage demand and at the same time save energy may be predicted.

The intelligent question answering scenarios include: chat robots and intelligent customer service.

The business decision-making scenarios include scenarios in fields of financial technology, medical fields and municipal fields.

The fields of financial technology include: marketing (such as coupon use prediction, advertising click behavior prediction, user portrait excavation, etc.) and customer acquisition, anti-fraud, anti-money laundering, underwriting and credit scoring, and commodity price prediction.

The medical fields include: disease screening and prevention, personalized health management and auxiliary diagnosis.

The municipal fields include: social governance, supervision and law enforcement, resource, environment and facility management, industrial development and economic analysis, public services and livelihood security, and smart cities (allocation and management of various urban resources such as public transport, online car hailing, bike sharing, etc.).

The service recommendation scenarios includes: recommendation on news, advertising, music, consulting, video and financial products (such as wealth management, insurance, etc.).

The search scenarios include: webpage search, image search, text search, video search, etc.

The abnormal behavior detection scenarios include: abnormal power consumption detection from customers of State Grid Corporation, malicious network traffic detection, and abnormal behavior detection in operation logs.

The method for assisting launch of a machine learning model according to the present disclosure can also be realized by an apparatus for creating a template of a machine learning scheme. FIG 8 shows a schematic block diagram of an apparatus for assisting launch of a machine learning model according to explanatory embodiments of the present disclosure. Functional units of the apparatus for assisting launch of the machine learning model may be implemented by hardware, software or a combination of the hardware and software that realizes the principle of the present disclosure. It can be understood by those skilled in the art that the functional units described in FIG 8 may be combined or divided into subunits to realize the principle disclosed above. Therefore, the description herein can support any possible combination or division, or further limitation of the functional units described herein.

In the following, the functional units that may be possessed by the apparatus for assisting launch of the machine learning model as well as operations that can be performed by individual functional units will be described in brief. For details involved therein, please refer to the relevant descriptions above, which will not be elaborated here.

Referring to FIG 8, the apparatus 800 for assisting launch of the machine learning model includes an acquiring module 810, a first determining module 820, a creating module 830 and an importing module 840.

The acquiring module 810 is configured to acquire a model file from offline training of the machine learning model.

The first determining module 820 is configured to determine a training data table used in a model training process by analyzing the model file. As an example, the first determining module 820 may be configured to obtain model training process information by analyzing the model file, and determine an input table corresponding to a feature processing step as the training data table used in the model training process, according to the model training process information. The model training process information may include but is not limited to at least one of the following items: a processing node in the model training process, an input table corresponding to the processing node, and an output table corresponding to the processing node.

The feature processing step includes a field name and a feature processing manner for the field name. The apparatus 800 for assisting launch of the machine learning model may further include a storage module. The storage module is configured to store, according to the field name involved in the feature processing step, data of the online data table in the online database with the field name as a key

The creating module 830 is configured to create in an online database an online data table having consistent table information with the training data table.

The importing module 840 is configured to import at least a part of offline data into the online data table. As an example, the apparatus 800 for assisting launch of the machine learning model may further include a second determining module configured to determine a data range for the feature processing step by analyzing the model file, and the importing module 840 may be configured to import offline data corresponding to the data range into the online data table.

The apparatus 800 for assisting launch of the machine learning model may further include a deploying module, a first predicting module, a second predicting module and a first launching module. The deploying module is configured to deploy a pre-launch prediction service for realizing a prediction function of the machine learning model; the first predicting module is configured to perform a first predicting operation on data to be analyzed through the pre-launch prediction service to obtain a first prediction result; the second predicting module is configured to perform a second predicting operation on the data to be analyzed in an offline environment to obtain a second prediction result; the comparing module is configured to compare the first prediction result with the second prediction result; and the first launching module is configured to determine whether to launch the pre-launch prediction service according to a difference between the first prediction result and the second prediction result.

The second predicting module may be configured to: determine a downstream execution operator and a model prediction operator by analyzing the model file, the downstream execution operator being configured to characterize an operation that needs to be performed on the data to be analyzed before model prediction; input the data to be analyzed into the downstream execution operator; and input an output of the downstream execution operator into the model prediction operator, an output of the model prediction operator being the second prediction result.

As an example, the apparatus 800 for assisting launch of the machine learning mode may further include a displaying module and a receiving module. The displaying module is configured to provide a user with a graphical interface for setting an online prediction service; and the receiving module is configured to receive a pre-launch prediction service selected by the user through the graphical interface. The acquiring module 810 may be configured to perform at least one of: acquiring a model file corresponding to the pre-launch prediction service from a server side; and receiving a model file uploaded by the user.

In an embodiment, the displaying module may be further configured to perform at least one of: displaying a model effect in the graphical interface; and displaying the online data table in the graphical interface.

In an embodiment, the displaying module may be further configured to display resource configuration information recommended to the user in the graphical interface.

In an embodiment, the receiving module may be further configured to receive resource configuration information set by the user through the graphical interface.

The apparatus 800 for assisting launch of the machine learning model may further include a first verifying module, and the first verifying module is configured to verify whether a current environment of the pre-launch prediction service meets a launching requirement, after the pre-launch prediction service is set.

The apparatus 800 for assisting launch of the machine learning model may further include a second verifying module and a second launching module. The second verifying module is configured to verify whether a prediction performance of the pre-launch prediction service is consistent with a prediction performance of the machine learning model in an offline environment, in response to that the current environment meets the launching requirement; and the second launching module is configured to convert the pre-launch prediction service into the online prediction service, in response to that the prediction performance of the pre-launch prediction service is consistent or basically consistent with the prediction performance of the machine learning model in the offline environment.

As an example, the second verifying module may be configured to: acquire sample data and an output field specified by the user; start an offline prediction task used for simulating an offline running environment and a simulative prediction task used for simulating an online running environment to perform a prediction operation on the sample data, respectively; and determine whether output results of the offline prediction task and the simulative prediction task for the output field are consistent.

The displaying module is further configured to provide the user with a service detail page to display at least one item of the pre-launch prediction service: a basic parameter, a model parameter, a consistency verification result, and service status information. For details on these service information, please refer to the relevant descriptions above.

As an example, the apparatus 800 for assisting launch of the machine learning model may further include a providing module. The providing module is configured to, in response to that the pre-launch prediction service is converted into the online prediction service, perform at least one of: providing the user with a service address of the online prediction service; and displaying an online prediction result of one or more pieces of prediction data to the user. The receiving module may be further configured to receive modification of one or more field values of the prediction data from the user; and the displaying module may be further configured to display an online prediction result of modified prediction data.

It should be understood that for the specific implementations of the apparatus 800 for assisting launch of the machine learning model according to explanatory embodiments of the present disclosure, reference can be made to the related descriptions on the method for assisting launch of the machine learning model made hereinbefore with reference to FIG 1 to FIG 7, which will not be elaborated here.

The method and apparatus for assisting launch of the machine learning model according to explanatory embodiments of the present disclosure are described above with reference to FIG 1 to FIG 8. It should be understood that the above method may be realized by a program recorded on a computer-readable medium. For example, according to explanatory embodiments of the present disclosure, a computer-readable storage medium having stored therein instructions may be provided, and on the computer-readable storage medium, there is recorded a computer program for executing a method for assisting launch of the machine learning model according to the present disclosure, as shown in FIG 1.

The computer program in the computer-readable storage medium can be run in an environment deployed in a computer device such as a client, a host, an agent device, a server, etc. It should be noted that the computer program may be used to perform additional steps other than those shown in FIG 1, or perform more specific processing when performing the above steps. Contents on these additional steps and the further processing have been described with reference to FIG 1, which will not be elaborated here to avoid repetition.

It should be noted that the apparatus for assisting launch of the machine learning model according to explanatory embodiments of the present disclosure may completely rely on the running of the computer program to achieve the corresponding functions, that is, individual modules of the apparatus corresponds to respective steps in the functional architecture of the computer program, so that the entire apparatus is called through a special software package (for example, a lib library) to achieve the corresponding functions.

On the other hand, the modules shown in FIG 8 can also be implemented by hardware, software, firm ware, middleware, microcode, or any combination thereof. When implemented in software, firmware, middleware or microcode, the program code or code segment for performing the corresponding operation may be stored in a storage medium like a computer-readable storage medium, so that a processor can perform the corresponding operation by reading and running the corresponding program code or code segment.

For example, explanatory embodiments of the present disclosure may also be implemented as a computing device. The computing device includes a storage component and a processor, the storage component has stored therein a set of computer executable instructions that, when run by the processor, causes the processor to perform the method for assisting launch of the machine learning model as described above.

The storage component is a memory. Enabling the processor to perform the method for assisting launch of the machine learning model as described above is to enable the processor to perform the following steps: acquiring a model file from offline training of the machine learning model; determining a training data table used in a model training process by analyzing the model file; creating in an online database an online data table having consistent table information with the training data table; and importing at least a part of offline data into the online data table.

The determining the training data table used in the model training process may include: obtaining model training process information by analyzing the model file; and determining an input table corresponding to a feature processing step as the training data table used in the model training process, according to the model training process information.

The model training process information may include at least one of the following items: a processing node in the model training process, an input table corresponding to the processing node, and an output table corresponding to the processing node.

The feature processing step may include a field name and a feature processing manner for the field name. The processor may be further configured to: store, according to the field name involved in the feature processing step, data of the online data table in the online database with the field name as a key.

The processor may be further configured to: determine a data range for a feature processing step by analyzing the model file. The importing at least a part of the offline data into the online data table may include: importing offline data corresponding to the data range into the online data table.

The processor may be further configured to: deploy a pre-launch prediction service for realizing a prediction function of the machine learning model; perform a first predicting operation on data to be analyzed through the pre-launch prediction service to obtain a first prediction result; perform a second predicting operation on the data to be analyzed in an offline environment to obtain a second prediction result; compare the first prediction result with the second prediction result; and determine whether to launch the pre-launch prediction service according to a difference between the first prediction result and the second prediction result.

The performing the second predicting operation on the data to be analyzed in the offline environment to obtain the second prediction result may include: determining a downstream execution operator and a model prediction operator by analyzing the model file, the downstream execution operator being configured to characterize an operation that needs to be performed on the data to be analyzed before model prediction; inputting the data to be analyzed into the downstream execution operator; and inputting an output of the downstream execution operator into the model prediction operator, an output of the model prediction operator being the second prediction result.

The processor may be further configured to: provide a user with a graphical interface for setting an online prediction service; and receive a pre-launch service selected by the user through the graphical interface. The acquiring the model file from the offline training of the machine learning model includes at least one of: acquiring a model file corresponding to the pre-launch prediction service from a server side; and receiving a model file uploaded by the user.

The processor may be further configured to perform at least one of: displaying a model effect in the graphical interface; and displaying the online data table in the graphical interface.

The processor may be further configured to perform at least one of: displaying resource configuration information recommended to the user in the graphical interface; and receiving resource configuration information set by the user through the graphical interface.

The processor may be further configured to: verify whether a current environment of the pre-launch prediction service meets a launching requirement, after the pre-launch prediction service is set.

The processor may be further configured to: verify whether a prediction performance of the pre-launch prediction service is consistent with a prediction performance of the machine learning model in an offline environment, in response to that the current environment meets the launching requirement, and convert the pre-launch prediction service into the online prediction service, in response to that the prediction performance of the pre-launch prediction service is consistent or basically consistent with the prediction performance of the machine learning model in the offline environment.

The verifying whether the prediction performance of the pre-launch prediction service is consistent with the prediction performance of the machine learning model in the offline environment may include: acquiring sample data and an output field specified by the user; starting an offline prediction task used for simulating an offline running environment and a simulative prediction task used for simulating an online running environment to perform a prediction operation on the sample data, respectively; and determining whether output results of the offline prediction task and the simulative prediction task for the output field are consistent.

The processor may be further configured to: provide the user with a service detail page to display at least one item of the pre-launch prediction service: a basic parameter, a model parameter, a consistency verification result, and service status information.

The basic parameter may include at least one of the following items: a service name, a service type, a running status, a deployment time, a running time, and a resource parameter.

The model parameter may include at least one of the following items: a model name, a model type, a model accuracy and a logarithmic loss value.

The consistency verification result may include a prediction result of one or more pieces of prediction data in an online environment and a scoring result of the one or more pieces of prediction data in the offline environment.

The service status information may include at least one of the following items: a performance index, log information and running status monitoring information.

The processor may be further configured to: provide the user with a service address of the online prediction service, in response to that the pre-launch prediction service is converted into the online prediction service.

The processor may be further configured to: display an online prediction result of one or more pieces of prediction data to the user, in response to that the pre-launch prediction service is converted into the online prediction service.

The processor may be further configured to: receive modification of one or more field values of the prediction data from the user; and display an online prediction result of modified prediction data.

Specifically, the computing device may be deployed in a server or a client, or on a node device in a distributed network environment. In addition, the computing device may be a personal computer (PC), a tablet device, a personal digital assistant, a smart phone, a web application or other devices capable of executing the above set of instructions.

Here, the computing device does not have to be a single computing device, but also may be any assembly of devices or circuits that can execute the above instructions (or the set of instructions) independently or together. The computing device may also be a part of an integrated control system or a system manager, or may be configured as a portable electronic device that interconnects with a local or remote network (e.g., via wireless transmission) through an interface.

In the computing device, the processor may include a central processing unit (CPU), a graphics processing unit (GPU), a programmable logic device, a dedicated processor system, a microcontroller or a microprocessor. As a nonrestrictive example, the processor may also include an analog processor, a digital processor, a microprocessor, a multi-core processor, a processor array, a network processor and the like.

Some operations described in the method for assisting launch of the machine learning model according to explanatory embodiments of the present disclosure can be realized by software, and some operations can be realized by hardware. In addition, these operations can also be realized by a combination of the software and hardware.

The processor may run instructions or codes stored in one of the storage components, and the storage component may also be used to store data. Instructions and data may also be sent and received via a network interface device through the network, and the network interface device may adopt any known transmission protocol.

The storage component may be integrated with the processor, for example, a random access memory (RAM) or a flash memory may be arranged in an integrated circuit microprocessor or the like. In addition, the storage component may include independent devices, such as an external disk drive, a storage array, or other storage devices that are available by any database system. The storage component and the processor may be operatively coupled, or may communicate with each other through, for example, I/O ports, network connections, etc., so that the processor can read files stored in the storage component.

In addition, the computing device may also include a video display (such as a liquid crystal display) and a user interaction interface (such as a keyboard, a mouse, a touch input device, and the like). All components of the computing device may be connected to each other via at least one of a bus and a network.

The operations involved in the method for assisting launch of the machine learning model according to explanatory embodiments of the present disclosure may be described as various interconnected or coupled functional blocks or functional diagrams. However, these functional blocks or functional diagrams may be equally integrated as a single logical device or operated according to imprecise boundaries.

For example, as described above, the apparatus for assisting launch of the machine learning model according to explanatory embodiments of the present disclosure may include the storage component and the processor, the storage component has stored therein a set of computer executable instructions that, when executed by the processor, causes the processor to perform the method for assisting launch of the machine learning model as described above.

Various explanatory embodiments of the present disclosure are described above. It should be understood that the above descriptions are only exemplary but not exhaustive, and the present disclosure is not limited to the explanatory embodiments described above. Many modifications and changes are apparent to those ordinarily skilled in the art without departing from the scope and spirit of the present disclosure. Therefore, the protection scope of the present disclosure is defined by the appended claims.

## Claims

1. A method for assisting launch of a machine learning model, comprising:
acquiring a model file from offline training of the machine learning model;
determining a training data table used in a model training process by analyzing the model file;
creating in an online database an online data table having consistent table information with the training data table; and
importing at least a part of offline data into the online data table.

2. The method according to claim 1, wherein the determining the training data table used in the model training process comprises:
obtaining model training process information by analyzing the model file; and
determining an input table corresponding to a feature processing step as the training data table used in the model training process, according to the model training process information.

3. The method according to claim 2, wherein the model training process information comprises at least one of a processing node in the model training process, an input table corresponding to the processing node, and an output table corresponding to the processing node.

4. The method according to claim 2, wherein the feature processing step comprises a field name and a feature processing manner for the field name, and the method further comprises:
storing, according to the field name involved in the feature processing step, data of the online data table in the online database with the field name as a key.

5. The method according to claim 1, further comprising:
determining a data range for a feature processing step by analyzing the model file;
wherein the importing at least a part of the offline data into the online data table comprises:
importing offline data corresponding to the data range into the online data table.

6. The method according to claim 1, further comprising:
deploying a pre-launch prediction service for realizing a prediction function of the machine learning model;
performing a first predicting operation on data to be analyzed through the pre-launch prediction service to obtain a first prediction result;
performing a second predicting operation on the data to be analyzed in an offline environment to obtain a second prediction result;
comparing the first prediction result with the second prediction result; and
determining whether to launch the pre-launch prediction service according to a difference between the first prediction result and the second prediction result.

7. The method according to claim 6, wherein the performing the second predicting operation on the data to be analyzed in the offline environment to obtain the second prediction result comprises:
determining a downstream execution operator and a model prediction operator by analyzing the model file, the downstream execution operator being configured to characterize an operation that needs to be performed on the data to be analyzed before model prediction;
inputting the data to be analyzed into the downstream execution operator; and
inputting an output of the downstream execution operator into the model prediction operator, an output of the model prediction operator being the second prediction result.

8. The method according to claim 1, further comprising:
providing a user with a graphical interface for setting an online prediction service; and
receiving a pre-launch prediction service selected by the user through the graphical interface;
wherein the acquiring the model file from the offline training of the machine learning model comprises at least one of:
acquiring a model file corresponding to the pre-launch prediction service from a server side; and
receiving a model file uploaded by the user.

9. The method according to claim 8, further comprising at least one of:
displaying a model effect in the graphical interface; and
displaying the online data table in the graphical interface.

10. The method according to claim 8, further comprising at least one of:
displaying resource configuration information recommended to the user in the graphical interface; and
receiving resource configuration information set by the user through the graphical interface.

11. The method according to claim 8, further comprising:
verifying whether a current environment of the pre-launch prediction service meets a launching requirement, after the pre-launch prediction service is set.

12. The method according to claim 11, further comprising:
verifying whether a prediction performance of the pre-launch prediction service is consistent with a prediction performance of the machine learning model in an offline environment, in response to that the current environment meets the launching requirement, and
converting the pre-launch prediction service into the online prediction service, in response to that the prediction performance of the pre-launch prediction service is consistent or basically consistent with the prediction performance of the machine learning model in the offline environment.

13. The method according to claim 12, wherein the verifying whether the prediction performance of the pre-launch prediction service is consistent with the prediction performance of the machine learning model in the offline environment comprises:
acquiring sample data and an output field specified by the user;
starting an offline prediction task used for simulating an offline running environment and a simulative prediction task used for simulating an online running environment to perform a prediction operation on the sample data, respectively; and
determining whether output results of the offline prediction task and the simulative prediction task for the output field are consistent.

14. The method according to claim 12, further comprising:
providing the user with a service detail page to display at least one item of the pre-launch prediction service: a basic parameter, a model parameter, a consistency verification result, and service status information.

15. The method according to claim 14, wherein the basic parameter comprises at least one of a service name, a service type, a running status, a deployment time, a running time, and a resource parameter.

16. The method according to claim 14, wherein the model parameter comprises at least one of a model name, a model type, a model accuracy and a logarithmic loss value.

17. The method according to claim 14, wherein the consistency verification result comprises a prediction result of one or more pieces of prediction data in an online environment and a scoring result of the one or more pieces of prediction data in the offline environment.

18. The method according to claim 14, wherein the service status information comprises at least one of a performance index, log information and running status monitoring information.

19. The method according to claim 12, further comprising:
providing the user with a service address of the online prediction service, in response to that the pre-launch prediction service is converted into the online prediction service.

20. The method according to claim 12, further comprising:
displaying an online prediction result of one or more pieces of prediction data to the user, in response to that the pre-launch prediction service is converted into the online prediction service.

21. The method according to claim 19, further comprising:
receiving modification of one or more field values of the prediction data from the user; and
displaying an online prediction result of modified prediction data.

22. An apparatus for assisting launch of a machine learning model, comprising:
an acquiring module, configured to acquire a model file from offline training of the machine learning model;
a first determining module, configured to determine a training data table used in a model training process by analyzing the model file;
a creating module, configured to create in an online database an online data table having consistent table information with the training data table; and
an importing module, configured to import at least a part of offline data into the online data table.

23. The apparatus according to claim 22, wherein the first determining module is configured to:
obtain model training process information by analyzing the model file; and
determine an input table corresponding to a feature processing step as the training data table used in the model training process, according to the model training process information.

24. The apparatus according to claim 23, wherein the model training process information comprises at least one of a processing node in the model training process, an input table corresponding to the processing node, and an output table corresponding to the processing node.

25. The apparatus according to claim 23, wherein the feature processing step comprises a field name and a feature processing manner for the field name, and the apparatus further comprises:
a storage module, configured to store, according to the field name involved in the feature processing step, data of the online data table in the online database with the field name as a key.

26. The apparatus according to claim 22, further comprising:
a second determining module, configured to determine a data range for the feature processing step by analyzing the model file,
wherein the importing module is configured to import offline data corresponding to the data range into the online data table.

27. The apparatus according to claim 22, further comprising:
a deploying module, configured to deploy a pre-launch prediction service for realizing a prediction function of the machine learning model;
a first predicting module, configured to perform a first predicting operation on data to be analyzed through the pre-launch prediction service to obtain a first prediction result;
a second predicting module, configured to perform a second predicting operation on the data to be analyzed in an offline environment to obtain a second prediction result;
a comparing module, configured to compare the first prediction result with the second prediction result; and
a first launching module, configured to determine whether to launch the pre-launch prediction service according to a difference between the first prediction result and the second prediction result.

28. The apparatus according to claim 27, wherein the second predicting module is configured to:
determine a downstream execution operator and a model prediction operator by analyzing the model file, the downstream execution operator being configured to characterize an operation that needs to be performed on the data to be analyzed before model prediction;
input the data to be analyzed into the downstream execution operator; and
input an output of the downstream execution operator into the model prediction operator, an output of the model prediction operator being the second prediction result.

29. The apparatus according to claim 22, further comprising:
a displaying module, configured to provide a user with a graphical interface for setting an online prediction service; and
a receiving module, configured to receive a pre-launch prediction service selected by the user through the graphical interface;
wherein the acquiring module is configured to perform at least one of:
acquiring a model file corresponding to the pre-launch prediction service from a server side; and
receiving a model file uploaded by the user.

30. The apparatus according to claim 29, wherein the displaying module is configured to perform at least one of
displaying a model effect in the graphical interface; and
displaying the online data table in the graphical interface.

31. The apparatus according to claim 29, wherein the displaying module is further configured to display resource configuration information recommended to the user in the graphical interface.

32. The apparatus according to claim 29, wherein the receiving module is further configured to receive resource configuration information set by the user through the graphical interface.

33. The apparatus according to claim 29, further comprising:
a first verifying module, configured to verify whether a current environment of the pre-launch prediction service meets a launching requirement, after the pre-launch prediction service is set.

34. The apparatus according to claim 33, further comprising:
a second verifying module, configured to verify whether a prediction performance of the pre-launch prediction service is consistent with a prediction performance of the machine learning model in an offline environment, in response to that the current environment meets the launching requirement; and
a second launching module, configured to convert the pre-launch prediction service into the online prediction service, in response to that the prediction performance of the pre-launch prediction service is consistent or basically consistent with the prediction performance of the machine learning model in the offline environment.

35. The apparatus according to claim 34, wherein the second verifying module is configured to:
acquire sample data and an output field specified by the user;
start an offline prediction task used for simulating an offline running environment and a simulative prediction task used for simulating an online running environment to perform a prediction operation on the sample data, respectively; and
determine whether output results of the offline prediction task and the simulative prediction task for the output field are consistent.

36. The apparatus according to claim 34, wherein the displaying module is further configured to provide the user with a service detail page to display at least one item of the pre-launch prediction service: a basic parameter, a model parameter, a consistency verification result, and service status information.

37. The apparatus according to claim 36, wherein the basic parameter comprises at least one of a service name, a service type, a running status, a deployment time, a running time, and a resource parameter.

38. The apparatus according to claim 36, wherein the model parameter comprises at least one of a model name, a model type, a model accuracy and a logarithmic loss value.

39. The apparatus according to claim 36, wherein the consistency verification result comprises a prediction result of one or more pieces of prediction data in an online environment and a scoring result of the one or more pieces of prediction data in the offline environment.

40. The apparatus according to claim 36, wherein the service status information comprises at least one of a performance index, log information and running status monitoring information.

41. The apparatus according to claim 34, further comprising:
a providing module, configured to, in response to that the pre-launch prediction service is converted into the online prediction service, perform at least one of:
providing the user with a service address of the online prediction service; and
displaying an online prediction result of one or more pieces of prediction data to the user.

42. The apparatus according to claim 41, wherein the receiving module is further configured to receive modification of one or more field values of the prediction data from the user; and
the displaying module is further configured to display an online prediction result of modified prediction data.

43. A system, comprising:
at least one computing device; and
at least one storage device having stored therein instructions,
wherein the instructions, when run by the at least one computing device, cause the at least one computing device to execute the method according to any one of claims 1 to 21.

44. A computer-readable storage medium having stored therein instructions that, when run by at least one computing device, cause the at least one computing device to execute the method according to any one of claims 1 to 21.

45. A computing device, comprising:
a processor; and
a memory, having stored therein a set of computer executable instructions,
wherein the set of computer executable instructions, when executed by the processor, causes the processor to:
acquire a model file from offline training of a machine learning model;
determine a training data table used in a model training process by analyzing the model file;
create in an online database an online data table having consistent table information with the training data table; and
import at least a part of offline data into the online data table.

46. The computing device according to claim 45, wherein the determining the training data table used in the model training process comprises:
obtaining model training process information by analyzing the model file; and
determining an input table corresponding to a feature processing step as the training data table used in the model training process, according to the model training process information.

47. The computing device according to claim 46, wherein the model training process information comprises at least one of a processing node in the model training process, an input table corresponding to the processing node, and an output table corresponding to the processing node.

48. The computing device according to claim 46, wherein the feature processing step comprises a field name and a feature processing manner for the field name, and
the processor is further configured to:
store, according to the field name involved in the feature processing step, data of the online data table in the online database with the field name as a key.

49. The computing device according to claim 45, wherein the processor is further configured to:
determine a data range for a feature processing step by analyzing the model file;
wherein the importing at least a part of the offline data into the online data table comprises:
importing offline data corresponding to the data range into the online data table.

50. The computing device according to claim 45, wherein the processor is further configured to:
deploy a pre-launch prediction service for realizing a prediction function of the machine learning model;
perform a first predicting operation on data to be analyzed through the pre-launch prediction service to obtain a first prediction result;
perform a second predicting operation on the data to be analyzed in an offline environment to obtain a second prediction result;
compare the first prediction result with the second prediction result; and
determine whether to launch the pre-launch prediction service according to a difference between the first prediction result and the second prediction result.

51. The computing device according to claim 50, wherein the performing the second predicting operation on the data to be analyzed in the offline environment to obtain the second prediction result comprises:
determining a downstream execution operator and a model prediction operator by analyzing the model file, the downstream execution operator being configured to characterize an operation that needs to be performed on the data to be analyzed before model prediction;
inputting the data to be analyzed into the downstream execution operator; and
inputting an output of the downstream execution operator into the model prediction operator, an output of the model prediction operator being the second prediction result.

52. The computing device according to claim 45, wherein the processor is further configured to:
provide a user with a graphical interface for setting an online prediction service; and
receive a pre-launch prediction service selected by the user through the graphical interface;
wherein the acquiring the model file from the offline training of the machine learning model comprises at least one of:
acquiring a model file corresponding to the pre-launch prediction service from a server side; and
receiving a model file uploaded by the user.

53. The computing device according to claim 52, wherein the processor is further configured to perform at least one of:
displaying a model effect in the graphical interface; and
displaying the online data table in the graphical interface.

54. The computing device according to claim 52, wherein the processor is further configured to perform at least one of:
displaying resource configuration information recommended to the user in the graphical interface;
receiving resource configuration information set by the user through the graphical interface.

55. The computing device according to claim 52, wherein the processor is further configured to:
verify whether a current environment of the pre-launch prediction service meets a launching requirement, after the pre-launch prediction service is set.

56. The computing device according to claim 55, wherein the processor is further configured to:
verify whether a prediction performance of the pre-launch prediction service is consistent with a prediction performance of the machine learning model in an offline environment, in response to that the current environment meets the launching requirement, and
convert the pre-launch prediction service into the online prediction service, in response to that the prediction performance of the pre-launch prediction service is consistent or basically consistent with the prediction performance of the machine learning model in the offline environment.

57. The computing device according to claim 56, wherein the verifying whether the prediction performance of the pre-launch prediction service is consistent with the prediction performance of the machine learning model in the offline environment comprises:
acquiring sample data and an output field specified by the user;
starting an offline prediction task used for simulating an offline running environment and a simulative prediction task used for simulating an online running environment to perform a prediction operation on the sample data, respectively; and
determining whether output results of the offline prediction task and the simulative prediction task for the output field are consistent.

58. The computing device according to claim 56, wherein the processor is further configured to:
provide the user with a service detail page to display at least one item of the pre-launch prediction service: a basic parameter, a model parameter, a consistency verification result, and service status information.

59. The computing device according to claim 58, wherein the basic parameter comprises at least one of a service name, a service type, a running status, a deployment time, a running time, and a resource parameter.

60. The computing device according to claim 58, wherein the model parameter comprises at least one of a model name, a model type, a model accuracy and a logarithmic loss value.

61. The computing device according to claim 58, wherein the consistency verification result comprises a prediction result of one or more pieces of prediction data in an online environment and a scoring result of the one or more pieces of prediction data in the offline environment.

62. The computing device according to claim 58, wherein the service status information comprises at least one of a performance index, log information and running status monitoring information.

63. The computing device according to claim 56, wherein the processor is further configured to:
provide the user with a service address of the online prediction service, in response to that the pre-launch prediction service is converted into the online prediction service.

64. The computing device according to claim 56, wherein the processor is further configured to:
display an online prediction result of one or more pieces of prediction data to the user, in response to that the pre-launch prediction service is converted into the online prediction service.

65. The computing device according to claim 63, wherein the processor is further configured to:
receive modification of one or more field values of the prediction data from the user; and
display an online prediction result of modified prediction data.
